# EUROPÄISCHE PATENTSCHRIFT

(11) **EP 0 916 177 B1**
(45) Veröffentlichungstag und Bekanntmachung des Hinweises auf die Patenterteilung: **10.04.2002**
(21) Anmeldenummer: 97938749.5
(22) Anmeldetag: 01.08.1997
(51) Int. Cl.: H02K 3/12

(54) **MEHRPHASIGE ELEKTRISCHE MASCHINE MIT EINER RAUMOPTIMIERTEN SCHICHTWICKLUNG**
MULTIPLE-PHASE ELECTRIC MACHINE WITH A SPACE-OPTIMISED TURN-TO-TURN WINDING
MACHINE ELECTRIQUE POLYPHASEE A ENROULEMENTS EN NAPPES A ESPACE OPTIMISE

(30) Priorität: 01.08.1996 DE 19632390
(43) Veröffentlichungstag der Anmeldung: 19.05.1999
(73) Patentinhaber: HILL, Wolfgang, 76135 Karlsruhe (DE)
(72) Erfinder: HILL, Wolfgang, 76135 Karlsruhe (DE)
(86) Internationale Anmeldenummer: DE9701667
(87) Internationale Veröffentlichungsnummer: WO9806160

(56) Entgegenhaltungen:
- DE-A- 3 704 780
- DE-C- 4 321 236
- GB-A- 1 329 205
- US-A- 3 634 708
- US-A- 4 131 811

## Beschreibung

Die Erfindung betrifft eine mehrphasige elektrische Maschine mit einer Schichtwicklung sowie Verfahren zur Herstellung derartiger Maschinen.

Eine gute Raumausnutzung in den Wickelköpfen schafft hei elektrischen Maschinen über kurze Verbindungsstrecken und große Leiterquerschnitte günstige Voraussetzungen für eine Steigerung der Leistungsdichte und des Wirkungsgrades.

Mit geschichteten Wicklungen, die aus in Richtung der Nuttiefe übereinandergestapelten Leiterschichten mit rechteckförmigen Leiterquerschnitten bestehen, gelingt es zwar hohe Nutfüllfaktoren zu erreichen, problematisch bleibt jedoch deren Herstellung.

Bei der in ***DE-AS 1 005 611*** beschriebenen Dreischichtwicklung sind alle drei Schichten unterschiedlich stark zur Welle hin abgekröpft.

Aus der ***DE-AS 1 025 058*** ist eine einschichtige Läufer-Stabwicklung bekannt, in der das Überschneidungsproblem gelöst wird, indem jeder Nutstab nur auf einer Seite um die volle Schichthöhe zur Welle hin abgekröpft wird, wobei benachbarte Nutstabenden immer unterschiedlich ausgestaltet sind.

In der ***US-A-3 634 708*** wird eine Schichtwicklungen eisenlose Glockenankerwicklung mit nur einer Leiterschicht im Magnetfeld und zwei Leiterschichten in den Wickelköpfen beschrieben. Jeder zweite Leiter weist im Wickelkopf eine Verformung in radiale Richtung um die Schichthöhe auf und weicht so den Leiterstränge anderer Phase aus.

Weiterhin sind Schichtwicklungen aus biegefrei vorgefertigten Leiterteilen bekannt. So werden in der ***DE 41 25 044 C2*** mehrphasige Leiterschichten beschrieben, bei denen der Leiterquerschnitt in den Wickelköpfen variiert wird. Die Anzahl der unterschiedlichen Leiterbauformen entspricht der Phasenanzahl, wobei keine gleichmäßige Aufteilung der Stromdichte im Wickelkopfraum erreicht wird.

In der ***DE 42 34 145 C1*** werden Schichtwicklungen beschrieben deren Leiterstränge unterschiedlicher Phasen sich im Wickelkopf in Richtung der Nuttiefe ausweichen und hierbei den Raum nutzen, der dem Joch vorgelagert ist. Die Leiterlänge ist abhängig von der Nuttiefe und Leiterstränge unterschiedlicher Phasen weisen unterschiedliche Bauformen auf.

Aus der ***DE 43 21 236 C1*** ist eine Schichtwicklung bekannt, die sich durch verflochtene Leiterstränge auszeichnet. Die Leiterstränge einer Doppelschicht sind nicht unabhängig voneinander herstellbar. Die Leiterschichten bestehen aus vielen Einzelteilen die vor dem Zusammenfügen in ihrer endgültigen Lage zueinander positioniert werden.

Der Erfindung liegt die Aufgabe zugrunde, eine mehrphasige elektrische Maschine mit sich überlappenden Leitersträngen derart weiter zu bilden, daß mit möglichst geringem Herstellungsaufwand kurze Verbindungsstrecken und eine vollständige und gleichmäßige Raumausnutzung in den Wickelköpfen erreicht wird. Desweiteren betrifft die Erfindung zwei Verfahren zum Herstellen einer derartigen mehrphasigen elektrischen Maschine.

Diese Aufgabe wird erfindungsgemäß mit den Merkmalen der Ansprüche 1, 7 und 8 gelöst. Erfindungsgemäß sind alle Leiterstränge einer Leiterschicht baugleich. In den Wickelköpfen verlaufen die Leiterstränge in Teilstrecken gleichzeitig in Nutrichtung und in Richtung der Nutbreite. Jeder Wickelkopfdurchgang weist zwei solcher Teilstrecken auf, die in unterschiedlichen Wickelkopfschichten liegen, wobei diese Wickelkopfschichten gegenüber der Schichtung in den Nuten in etwa um eine halbe Leiterhöhe in Richtung der Nuttiefe versetzt sind.

Der Übergang von einer Nutschicht in eine Wickelkopfschicht erfolgt vorzugsweise in einem kontinuierlichen Übergang, wobei die Leiterhöhe beibehalten wird. In der Mitte jedes Wickelkopfdurchganges wechselt der Leiterstrang die Wickelkopfschichten. Nach dem zweiten, schräg verlaufenden Teilstück bringt ein zweiter Übergang den Leiterstrang wieder um eine halbe Schichthöhe zurück in die bisherige Nutschicht. Die beiden Übergangszonen kompensieren somit die durch den Schichtwechsel in Richtung der Nuttiefe zurückgelegte Wegstrecke.

Handelt es sich bei dem Schichtwechsel an der Wickelkopfaußenseite dagegen um einen Leiterschichtwechsel, erfolgt der Schichtwechsel und auch der zweite Übergang dieses Wickelkopfdurchganges in die gleiche Nuttiefe-Richtung wie der erste Übergang. Hierbei werden nicht Aufeinanderliegende sondern immer die übernächsten Leiterschichten in Reihe geschaltet. In den Nuten aufeinanderliegende Leiterschichten leiten den Strom in den Wickelköpfen in entgegengesetzte Nutbreiten-Richtungen. Sie gehören zur gleichen Phase und können außerhalb der Wickelköpfe sowohl parallel als auch in Reihe geschaltet werden.

Da der Leiterverlauf keine Leiterquerschnittsänderung erfordert, sind die Leiterstränge auch durch Verformen von Profildrähten herstellbar. Die baugleichen mäanderförmigen Leiterteile sind auch als Sinterteil oder Gußteil einstückig und biegeradienfrei herstellbar. Bei größeren Leiterquerschnitten werden die Leiterteile vorzugsweise aus einer Vielzahl von baugleichen Leiterelementen zusammengesetzt, die z.B. durch Gesenkschmieden, maßgenau vorgefertigt werden. Das Zusammenfügen von Leiterschichten erfolgt dann, z.B. mittels Elektronen- oder Laserstrahl, noch vor dem Aufbringen der Isolierung.

Die Zeichnungen stellen vorteilhafter Ausführungsformen der Erfindung dargestellt.
- Fig. 1: zeigt ein Leiterelement das dem Leiterverlauf einer Polteilung entspricht;
- Fig. 2: zeigt zwei zusammengefügte Leiterelemente;
- Fig. 3: zeigt einen vier Polteilungen umfassenden, linearisierten Ausschnitt von zwei aufeinanderliegenden, dreiphasigen Leiterschichten;
- Fig. 4: zeigt in drei Ausschnitten das Einsetzen einer dreiphasigen, vierlagigen Schichtwicklung in einen genuteten weichmagnetischen Körper eines Linearmotors.

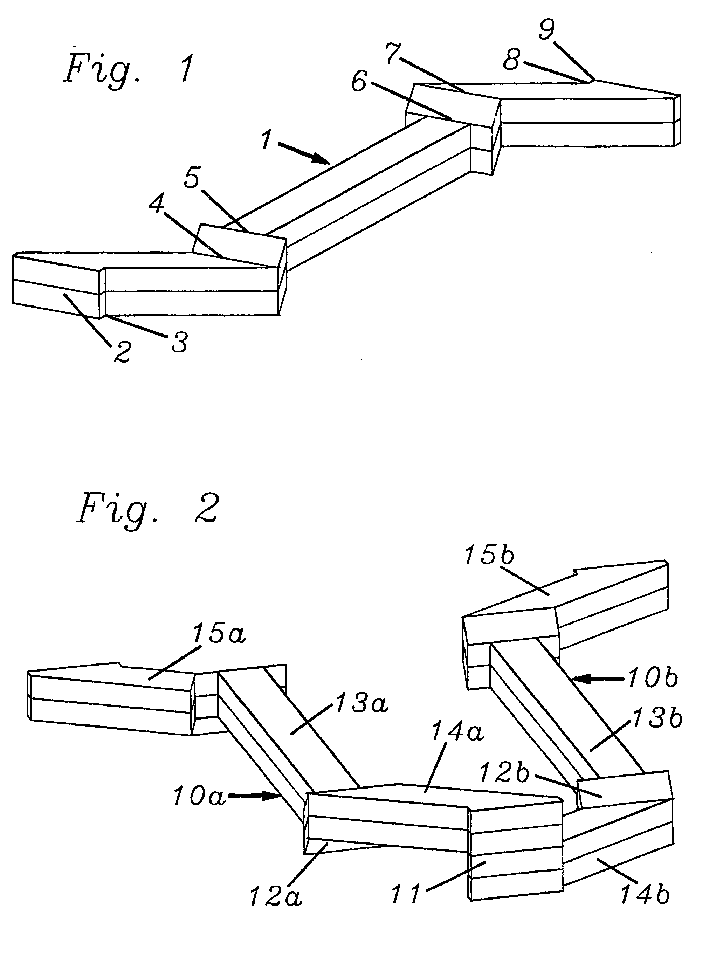

Das in **Figur 1** linearisiert dargestellte Leiterelement **1**, entspricht der kleinsten Unterteilung eines Leiterstranges in baugleiche Leiterelemente. Die beiden Enden **2** und **9** bilden jeweils einen Teil der Außenfläche der Wickelköpfe. Diese typische Ausgestaltung kann in sieben Abschnitte aufgeteilt werden, wobei die mittlere Teilstrecke **5 - 6** innerhalb einer Nut angeordnet ist. Nach dem Verlassen der Nut verläuft der Leiterstrang in sogenannten Übergangszonen **4-5** und **6-7** weiter in Nutrichtung und zusätzlich auch in Richtung der Nuttiefe, wobei auf beiden Seiten in unterschiedliche Nuttiefe-Richtungen jeweils eine Strecke entsprechend der halben Leiterhöhe zurückgelegt wird. Die Teilstrecken **3 - 4** und **7 - 8** sind daher in Wickelkopfschichten mit unterschiedlichem Abstand zur Luftspaltoberfläche angeordnet. Sie verlaufen gleichzeitig in Nutrichtung und in Richtung der Nutbreite. An den Enden des Leiterteils **1** sind in Nutrichtung weisende Erweiterungen **2 - 3** und **8 - 9** vorgesehen, um eine Leiterquerschnittsverengung beim Schichtwechsel zu vermeiden.

Dieser Schichtwechsel ergibt sich, indem die Leiterenden von zwei baugleichen Leiterelementen **10a,b -** wie in **Figur 2** gezeigt - an den Wickelkopfaußenseiten in Richtung der Nuttiefe aufeinanderliegen. Die an der Wechselstelle **11** in Richtung der Nuttiefe zurückgelegte Wegstrecke wird innerhalb einer Leiterschicht von den beiden Übergangszonen **12a,b** kompensiert. Auf diese Weise miteinander verbundene Nutteilstrecken **13a,b** weisen den gleichen Abstand zur Luftspaltoberfläche auf. In den Wickelköpfen sind die schräg verlaufenden Teilstrecken **14a,b** bzw. **15a,b** ebenfalls in zum Luftspalt parallelen Schichten angeordnet. Zu einer Leiterschicht gehören somit stets zwei übereinanderliegende Wickelkopfschichten und eine Nutschicht, wobei die Wickelkopfschichten gegenüber der Nutschicht um eine halbe Schichthöhe versetzt angeordnet sind.

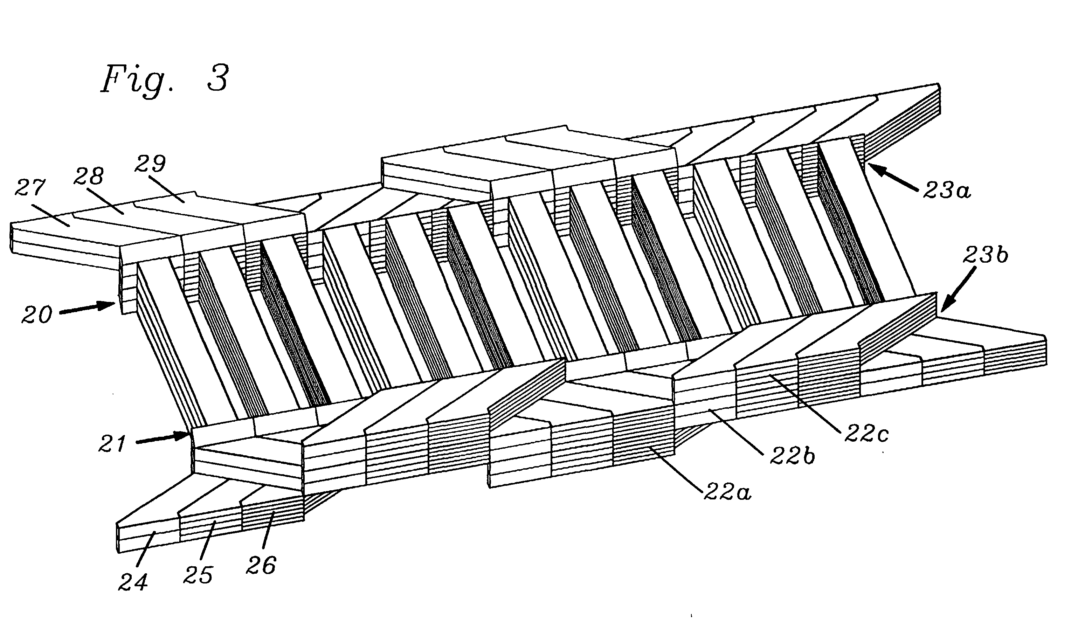

Während eine Leiterschicht ihre Nutschicht alleine ausfüllt, teilt sie ihre beiden Wickelkopfschichten jeweils mit einer der beiden benachbarten Leiterschichten. Dieser Schichtaufbau wird in **Figur 3** anhand eines vier Polteilungen umfassenden Ausschnitts aus zwei übereinanderliegenden, dreiphasigen Leiterschichten **20, 21** ersichtlich. Die beiden Leiterschichten nutzen zusammen drei Wickelkopfschichten **22a** - **c**, wobei sie die mittlere Wickelkopfschicht **22b** gemeinsam vollständig ausfüllen. Hierzu führen die in den Nuten übereinanderliegenden Leiterschichten **20, 21** den Strom in den Wickelköpfen **23a,b** in entgegengesetzte Nutbreiten-Richtungen. Jede Leiterschicht besteht aus baugleichen Leitersträngen **24** bis **29**, deren Anzahl der Phasenanzahl entspricht und die unterschiedlich dicht schraffiert sind.

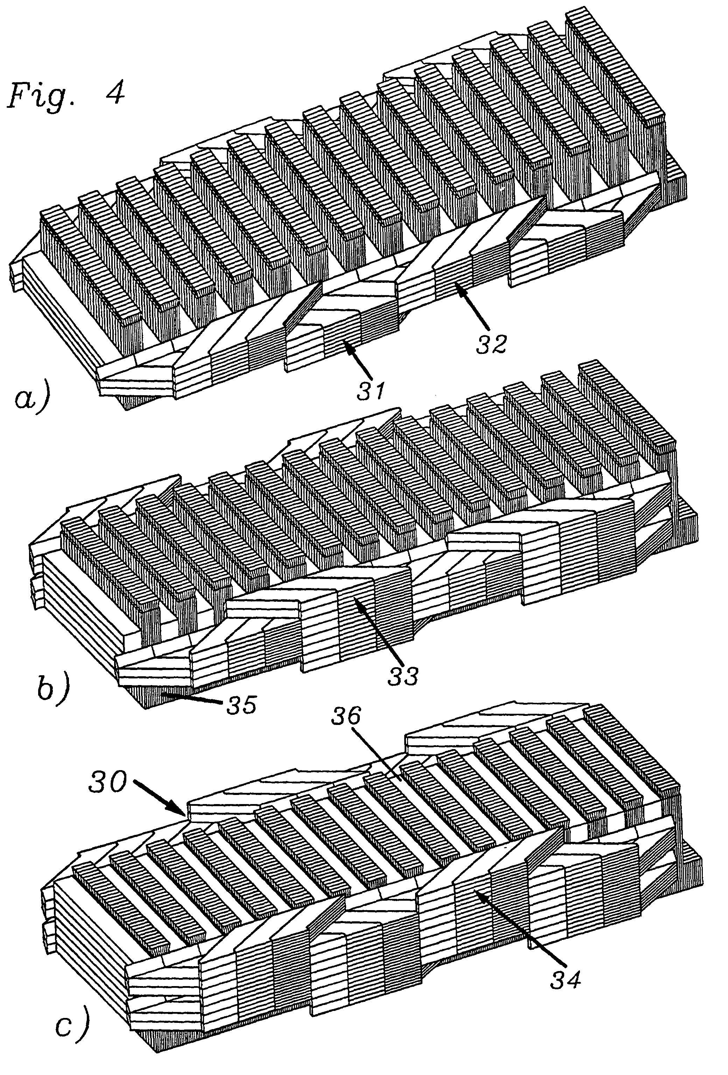

In **Figur 4** wird das Einsetzen einer vierschichtigen Wicklung **30** in den genuteten weichmagnetischen Körper **35** eines Linearmotors in drei aufeinanderfolgenden Arbeitsphasen dargestellt. Während in **Fig. 4a** die beiden unteren Leiterschichten **31, 32** bereits - analog zu **Fig. 3** - ein kompaktes Paket bilden, kommt in **Fig. 4b** eine dritte Leiterschicht 33 und in Fig. **4c** die oberste Leiterschicht **34** hinzu. Die Leiterstränge jeder Leiterschicht können somit einzeln oder als funktionsbereites Paket in den genuteten weichmagnetischen Körper **35** eingesetzt werden. Die offenen Nuten **36** werden durch teilweise weichmagnetische Nutkeile (nicht dargestellt) verschlossen.

Durch Biegung um unterschiedliche Achsen kann der linearisiert dargestellte Aufbau auf Axial- bzw. Radialflußmaschinen übertragen werden.

## Patentansprüche

1. Mehrphasige elektrische Maschine mit mindestens einem Luftspalt, der zwei gegeneinander bewegliche Körper trennt, und mit mindestens einem weichmagnetischen Körper (35) der Nuten aufweist in denen ein Teil einer Schichtwicklung liegt, wobei die Schichtwicklung aus Leitersträngen (24-29) unterschiedlicher Phasen besteht und die Leiterstränge in den Nuten zur an den Luftspalt grenzenden Oberfläche des weichmagnetischen Körpers (35) in etwa parallele Oberflächen aufweisen, wobei der Abstand dieser Oberflächen der Leiterhöhe entspricht, wobei Teilbereiche der Leiterstränge unterschiedlicher Phasen, die den gleichen Abstand zur an den Luftspalt grenzenden Oberfläche des weichmagnetischen Körpers aufweisen, gemeinsam eine mehrphasige Leiterschicht bilden und sich innerhalb einer mehrphasigen Leiterschicht die Leiterstränge (24-29) unterschiedlicher Phasen in den außerhalb des weichmagnetischen Körpers (35) angeordneten Wickelköpfen (23a,b) überlappen, indem die Leiterstränge (24-29) gleichzeitig in Richtung der Nuten und in Richtung der Nutbreite verlaufen und indem bei jedem Wickelkopfdurchgang eines Leiters innerhalb einer Leiterschicht ein Wechsel zwischen aufeinanderliegenden Wickelkopfschichten (11) stattfindet,
**dadurch gekennzeichnet, daß** jeder Leiterstrang (24-29) innerhalb der Wickelköpfe (23a,b) in Schichten verläuft, die gegenüber den Schichten in den Nuten (36) in Richtung der Nuttiefe um einen Bruchteil der Leiterhöhe versetzt sind.

2. Mehrphasige elektrische Maschine nach Anspruch 1,
**dadurch gekennzeichnet, daß** zwischen den Wickelkopfaußenseiten (2, 9) der Leiterstrang drei zur Luftspaltoberfläche parallele Teilstrecken (3-4, 5-6, 7-8) aufweist, die durch zwei Übergangszonen (4-5, 6-7) verbunden sind, wobei in den Übergangszonen der Leiterstrang eine Wegstrecke in Richtung der Nuttiefe zurücklegt.

3. Mehrphasige elektrische Maschine nach Anspruch 1,
**dadurch gekennzeichnet, daß** die Leiterstränge zwischen zwei Schichtwechseln (11) jeweils eine konstante Leiterhöhe in Richtung der Nuttiefe aufweisen.

4. Mehrphasige elektrische Maschine nach Anspruch 1,
**dadurch gekennzeichnet, daß** die Leiterstränge (24 bis 29) aus baugleichen Leiterelementen (1) zusammengesetzt sind.

5. Mehrphasige elektrische Maschine nach Anspruch 1,
**dadurch gekennzeichnet, daß** der Leiterquerschnitt der Leiterstränge (24-29) beim Nut-Wickelkopf-Übergang (5, 6) jeweils in Richtung der Nutbreite vergrößert ist und die Leiterelemente (1) an beiden Enden (2 bzw. 9) in Richtung der Nuten verlängert sind.

6. Mehrphasige elektrische Maschine nach einem der voranstehenden Ansprüche,
**dadurch gekennzeichnet, daß** in Linearmaschinen und in Sektoren aufgeteilten Maschinen die Leiterschichten (31 bis 34) in Teilstrecken enden, die in den Nuten aufeinanderliegen, wobei die Leiterschichtenden an ihrer in Bewegungsrichtung weisenden Oberfläche miteinander paarweise verbunden sind.

7. Verfahren zur Herstellung einer mehrphasigen elektrischen Maschine mit einer Schichtwicklung aus mindestens 2 mehrphasigen Leiterschichten, deren Leiterstränge (24-29) teilweise in Nuten eines weichmagnetischen Körpers (35) angeordnet sind und die sich in den Wickelköpfen (23a,b) überlappen, indem sie gleichzeitig in Richtung der Nuten und in Richtung der Nutbreite verlaufen und indem bei jedem Wickelkopfdurchgang eines Leiters innerhalb einer Leiterschicht ein Wechsel zwischen aufeinanderliegenden Wickelkopfschichten (11) stattfindet,
**dadurch gekennzeichnet, daß** die gesamte Leitermasse einer Phase und einer Leiterschicht als einstückiges Leiterteil vorgefertigt wird, dieses Leiterteil vor dem Zusammensetzen der Schichtwicklung aus baugleichen derartigen Leiterteilen mit einer elektrischen Isolation versehen wird und nach dem Zusammensetzen der Schichtwicklung an den Wickelkopfaußenseiten die Enden von Leiterteilen unterschiedlicher Leiterschichten, die im Nutbereich durch eine um eine Polteilung versetzt angeordnete Leiterschicht getrennt sind, elektrisch leitend miteinander verbunden werden.

8. Verfahren zur Herstellung einer mehrphasigen elektrischen Maschine mit einer Schichtwicklung aus geschichteten Leiterteilen, deren Leiterstränge (24 bis 29) teilweise in Nuten eines weichmagnetischen Körpers (35) angeordnet sind und die sich in den Wickelköpfen (23a,b) überlappen, indem sie gleichzeitig in Richtung der Nuten und in Richtung der Nutbreite verlaufen und indem bei jedem Wickelkopfdurchgang eines Leiters ein Wechsel zwischen aufeinanderliegenden Wickelkopfschichten (11) stattfindet,
**dadurch gekennzcichnet,** daß die geschichteten Leiterteile in einer Vorrichtung durch Gießen, Sintern oder Umformen in eine mäanderförmige Form gebracht werden, die in den Rändern an denen der Wechsel der Wickelkopfschichten stattfindet die doppelte Höhe aufweist als in den mittleren Teilbereichen, und nach dem Auftragen einer Isolierung auf die vorgefertigten Leiterteile eine mehrere Polteilungen umfassende mehrphasige Leiterschicht durch Ineinanderschieben von baugleichen Leiterteilen hergestellt wird, wobei die Leiterhöhe der mehrphasigen Leiterschicht der Leiterhöhe der baugleichen Leiterteile entspricht.

## Claims

1. Multiple phase electric machine with at least one air gap, said air gap separating two bodies that move with respect to each other, and with at least one soft magnetic body (35) with grooves, in said grooves being arranged a section of a layer winding, said layer winding consisting of conductor lanes (24 - 29) of different phases, said conductor lanes in said grooves possessing surfaces that are approximately parallel to the surface of said soft magnetic body (35) facing said air gap, the distance of said surfaces of said conductor lanes corresponding to the height of the conductor, sections of said conductor lanes of different phases that possess the same distance to said surface of said soft magnetic body facing said air gap comprising together a multiple phase conductor layer, said conductor lanes (24 - 29) of different phases within said multiple phase conductor layer overlapping in the winding overhangs (23a, b) arranged outside said soft magnetic body (35), said conductor lanes (24 - 29) being aligned concurrently in direction of the groove length and in direction of the groove width, and within one multiple phase conductor layer a change-over between winding layers stacked in said winding overhangs occurring in each pass of said conductor through said winding overhangs,
**wherein** each said conductor lane (24 - 29) within said winding overhangs (23a, b) is arranged in layers that are offset in relation to the layers in said grooves (36) by a fraction of the height of said conductor in direction of the groove depth.

2. Multiple phase electric machine in accordance with claim 1,
**wherein** between the outsides (2, 9) of said winding overhang said conductor lane possesses three sections (3-4, 5-6, 7-8) parallel to said air gap surface, said sections being connected by two transitional zones (4-5, 6-7), and said conductor lane covering a distance in direction of said groove depth in said transitional zones.

3. Multiple phase electric machine in accordance with claim 1,
**wherein** said conductor lanes between said change-over (11) of layers possess a constant conductor height in direction of said groove depth.

4. Multiple phase electric machine in accordance with claim 1,
**wherein** said conductor lanes (24 - 29) are composed of identical conductor elements (1).

5. Multiple phase electric machine in accordance with claim 1,
**wherein** the conductor cross section of said conductor lanes (24 - 29) at the transition (5, 6) from said groove to said winding overhang is enlarged in direction of the groove width and said conductor elements (1) at their two respective ends (2, 9) are elongated in direction of the groove length.

6. Multiple phase electric machine in accordance with claim 1,
**wherein** in linear machines and in machines divided into sectors said conductor layers (31 - 34) terminate in sections that are stacked in said grooves, and said ends of said conductor layers are connected in pairs at the surface facing the direction of movement.

7. Process for the production of a multiple phase electric machine with a layer winding composed of at least two multiple phase conductor layers, the conductor lanes (24 - 29) of said winding being partially arranged in grooves of a soft magnetic body (35) and said conductor lanes overlapping in the winding overhangs, said conductor lanes being aligned concurrently in direction of said groove length and in direction of said groove width, and within one multiple phase conductor layer a change-over (11) between winding layers stacked in said winding overhangs occurring in each pass of said conductor through said winding overhang,
**wherein** the entire mass of the conductor of a phase and of a conductor layer is prefabricated as a unitary conductor part, said unitary conductor part, prior to assembly of a layer winding from identical such conductor parts, is provided with electrical insulation, and after assembly of said layer winding the ends of conductor parts of different conductor layers, which in the area of said groove are separated by a conductor layer that is set off by one pole pitch, are joined electrically conductive at the outside of said winding overhangs.

8. Process for the production of a multiple phase electric machine with a layer winding composed of stacked conductor parts, the conductor lanes (24 - 29) of said layer winding being partially arranged in grooves of a soft magnetic body (35) said conductor lanes overlapping in the winding overhangs (23a, b), said conductor lanes being aligned concurrently in direction of said groove length and in direction of said groove width, and a change-over (11) between winding layers stacked in said winding overhangs occurring in each pass of said conductor through said winding overhang,
**wherein** said stacked conductor parts are transformed into a meander-shaped configuration by casting, sintering or deforming in a device, said configuration possessing at its rim ranges where said change-over of said winding overhang layers occurs twice the height in relation to the sections between said rim ranges, and after application of insulation onto the prefabricated conductor parts a multiple phase conductor layer comprising several pole pitches is produced by pushing together identical conductor parts, the conductor height of said multiple phase conductor layer corresponding to the conductor height of the identical conductor parts.

## Revendications

1. Machine électrique polyphasée avec au moins un entrefer, qui sépare deux corps mobiles l'un contre l'autre, et avec au moins un corps magnétique doux (35),qui présente des rainures, sur lesquelles se positionne une partie d'un bobinage à couches, en quoi bobinage à couches est composé de cordes conductrices (24 - 29) à phases diverses et les cordes conductrices dans les rainures possèdent des surfaces à peu près parallèles à la surfaces du corps magnétique doux (35) délimitant l'entrefer, en quoi la distance d'écart entre ces surfaces correspond à la hauteur du conducteur, en quoi certaines parties des cordes conductrices à phases diverses, possèdent la même distance d'écart jusqu'à la surface du corps magnétique doux délimitant l'entrefer, forment ensemble une couche conductrice polyphasée et se chevauchent en dedans d'une couche conductrice polyphasée sur les cordes conductrices (24 - 29) de phases diverses dans les têtes de bobines (23a, b), arrangées hors du corps magnétique doux (35), pendant que les cordes conductrices (24 - 29) s'étendent simultanément dans la direction de la rainure et dans la direction de la largeur de la rainure, et pendant que chaque passage de tête de bobine d'une conducteur en dedans d'une couche conductrice il se trouve une alternance (11) entre les couches superposées de têtes de bobines,
**caractérisée en ce que** chaque corde conductrice (24 - 29) s'étend en dedans des têtes de bobines (23a, b) en couches, qui, vis-à-vis des couches situées dans les rainures (36), sont décalées par une fraction de la hauteur du conducteur dans la direction de la profondeur de la rainure.

2. Machine électrique polyphasée selon la revendication 1,
**caractérisée en ce que**, entre les faces extérieures des têtes de bobines (2, 9), la corde conductrice présente trois longueurs partielles (3 - 4, 5 - 6, 7 - 8) parallèles à la surface de l'entrefer, qui se raccordent par deux zones de passage (4 - 5, 6 - 7), en quoi que dans les zones de passage, la corde conductrice parcourt un chemin en sens de profondeur de la rainure.

3. Machine électrique polyphasée selon la revendication 1,
**caractérisée en ce que** les cordes conductrices entre deux alternances de couches (11) possèdent respectivement une hauteur constante en direction de la profondeur de la rainure.

4. Machine électrique polyphasée selon la revendication 1,
**caractérisée en ce que** les cordes conductrices (24 à 29) sont composées d'éléments du conducteur de construction similaire (1).

5. Machine électrique polyphasée selon la revendication 1,
**caractérisée en ce que** la section droite du conducteur des cordes conductrices (24 - 29) est augmentée au passage de la rainure à la tête de bobine (5, 6), respectivement dans le sens de la largeur de la rainure et **en ce que** les éléments du conducteur (1) se prolongent à chacune des deux extrémités (soit 2 ou 9) en direction de la rainure.

6. Machine électrique polyphasée selon une des revendications précitées,
**caractérisée en ce que** les couches conductrices (31 à 34) dans les machines linéaires et les machines reparties en secteurs aboutissent en parcours partiel, qui sont superposés dans les rainures, en quoi les extrémités des couches conductrices sont raccordées en couples au niveau de la surface, qui donne sur la direction do son mouvement.

7. Procédé pour la fabrication d'une machine électrique polyphasée avec un bobinage de couches, composé d'au moins de deux couches conductrices polyphasées, dont les cordes conductrices (24 - 29) sont arrangées en partie dans les rainures d'un corps magnétique doux (35) et qui se chevauchent dans les têtes de bobines (23a, b), pendant que les cordes conductrices s'étendent simultanément dans la direction de la rainure et dans la direction de la largeur de la rainure, et pendant que chaque passage de tête de bobine d'une conducteur en dedans d'une couche conductrice il se trouve une alternance (11) entre les couches superposées de têtes de bobines
**caractérisée en ce que** la totalité de chaque masse conductrice à une phase et à une couche conductrice est préfabriqué d'une seule pièce conductrice, laquelle pièce conductrice est pourvue avec isolement électrique avant l'assemblage de bobinage à couches, de tels éléments conducteurs de construction similaire, et après l'assemblage de bobinage à couches sur les faces extérieures des têtes de bobines, les extrémités de pièces conductrices à couches diverses conductrices, qui, dans la zone de rainure, sont séparées par une couche conductrice prévue avec un décalage d'un pas polaire, sont raccordées l'une à l'autre en conducteurs de courant électrique.

8. Procédé pour la fabrication d'une machine électrique polyphasée avec un bobinage de couches composé de pièces conductrices à couches, dont les cordes conductrices (24 à 29) sont arrangées en partie dans les rainures d'une corps magnétique doux (35) et qui se chevauchent dans les têtes de bobines (23a, b), pendant que les cordes conductrices s'étendent simultanément dans la direction de la rainure et dans la direction de la largeur de la rainure, et pendant que chaque passage de tête de bobine d'une conducteur en dedans d'une couche conductrice il se trouve une alternance (11) entre les couches superposées de têtes de bobines,
**caractérisée en ce que** les pièces conductrices en couches superposées sont façonnées soit par coulage, frittage ou formage dans un dispositif en forme à méandres, qui, au niveau des bords où se fait l'alternance des couches de têtes de bobines, possède une hauteur double de celle dans certaines parties du milieu, et après l'apprêt de l'isolement sur les pièces conductrices préfabriquées une couche conductrice polyphasée comprenant plusieurs pas polaires est fabriquée par l'imbrication de pièces similaires en construction, en quoi la hauteur du conducteur de la couche conductrice polyphasée correspond à la hauteur du conducteur des pièces conductrices similaires en construction.
